# FASCICULE DE BREVET EUROPEEN

(11) **EP 3 630 608 B1**
(45) Date de publication et mention de la délivrance du brevet: **12.10.2022**
(21) Numéro de dépôt: 18740906.5
(22) Date de dépôt: 21.06.2018
(51) Int. Cl.: B64C 39/02, B64F 3/02

(54) **CONNEXION ENTRE UN DRONE FILAIRE DÉTACHABLE ET SON FIL**
VERBINDUNG ZWISCHEN EINER ABNEHMBAREN VERDRAHTETEN DROHNE UND DRAHT DAVON
CONNECTION BETWEEN A DETACHABLE WIRED DRONE AND THE WIRE THEREOF

(30) Priorité: 31.05.2017 FR 1770560
(43) Date de publication de la demande: 08.04.2020
(73) Titulaire: ELISTAIR, 69410 Champagne au Mont d'Or (FR)
(72) Inventeur: PENET, Timothée, Hervé, Marc, Marie, 69005 Lyon (FR); DUBOIS, Olivier, Bernard, François, 69005 Lyon (FR); DE MARLIAVE, Guilhem, Marie, Christian, 69002 Lyon (FR)
(74) Mandataire: Germain Maureau
(86) Numéro de dépôt international: PCT/IB2018/054572
(87) Numéro de publication internationale: WO 2018/220607

(56) Documents cités:
- CN-A- 106 585 972
- CN-U- 204 916 215
- US-A- 2 409 155
- US-A1- 2017 029 105

## Description

### DOMAINE TECHNIQUE DE L'INVENTION

La présente invention concerne la connexion entre un drone filaire détachable et son fil. Un drone est un engin volant piloté à distance au moyen d'un dispositif de contrôle. Les drones concernés sont ceux dits à voilure tournante, ce qui comprend toutes les formes de modèles réduits d'hélicoptères connues. Les drones filaires sont les drones reliés à une base au sol par l'intermédiaire d'un fil, le fil ayant souvent pour fonction l'alimentation électrique du drone, ou le transfert de données, ou le rôle de confiner le drone dans une zone de sécurité. Le fil dont il s'agit ici sert au moins à l'alimentation électrique du drone. Un drone filaire détachable est un drone dont le fil peut être déconnecté à distance, pendant que le drone est en vol, et le drone continue un vol autonome sur batteries.

Dans certains cas, il est pratique d'utiliser des drones filaires détachables. En voici deux exemples :
- Un premier exemple concerne les missions de surveillance de personnes, d'animaux, ou plus généralement d'objets en mouvement. Le drone effectue sa mission de surveillance, branché au fil. Sa zone de déplacement est limitée par la longueur du fil. Si l'opérateur ressent le besoin d'examiner un événement lointain, il ordonne le détachement du fil, et dirige le drone, alimenté par la batterie, vers le point d'intérêt. La prise doit être conçue pour absorber des chocs répétés, de grande hauteur, et doit limiter les blessures des personnes au sol.
- Un deuxième exemple concerne les missions de surveillance d'ouvrage d'art en milieu contraint, c'est à dire en un milieu ou la progression du drone filaire peut être entravée par différents obstacles. Le fil peut alors être coincé par tel ou tel obstacle. Le drone doit alors pouvoir se détacher de son fil et atterrir sur batterie d'urgence.

### TECHNIQUE ANTÉRIEURE

Il est connu d'utiliser des drones filaires équipés de batteries de secours, pour des atterrissages d'urgence en cas de défaut de l'alimentation filaire. Il est aussi connu d'utiliser des drones équipés de parachute, au cas où le drone ne peut atterrir dans une situation jugée convenable par le dispositif de contrôle ou par l'utilisateur.
Certains brevets s'intéressent à des systèmes permettant au drone d'atterrir sans son fil en situation d'urgence. Le brevet WO2007/141795 décrit un tel système, tel que le drone peut se détacher de son fil d'alimentation et atterrir sur batterie d'urgence sans son alimentation filaire. Ce document décrit également des systèmes de protection des personnes au sol vis-à-vis de la chute du drone : système de type parachute.

Les inconvénients non limitatifs de l'état antérieur sont :
- la prise est abîmée par une répétition de chutes de grande hauteur,
- le risque de blessure d'une personne heurtée par la prise chutant de grande hauteur est significatif,
- le risque d'électrisation d'une personne heurtée par la chute de la prise est significatif,
- le risque d'électrisation d'une personne manipulant la prise abîmée est significatif.

Le brevet CN106585972A divulgue un système comprenant un certain nombre de drones, tous attachés les uns aux autres.

### EXPOSÉ DE L'INVENTION

Le dispositif de protection selon l'invention est dédié à la connexion entre un drone filaire et son fil, tels que :
- une prise sur le fil et une embase sur le drone assurent au moins deux fonctions, alimentation en puissance du drone, et reprise des efforts mécaniques entre le drone et le fil,
- la prise est détachable à distance, pendant que le drone est en vol,
- une base au sol alimente le fil.

Selon l'invention permet de remédier aux inconvénients précédemment cités : la prise devient alors réutilisable après de nombreuses chutes, le dispositif réduit le risque de blesser les personnes, et le dispositif réduit le risque d'électrisation des personnes.

Selon l'invention est définie par la revendication 1 annexée.

### VARIATIONS DE L'INVENTION

Selon des variations de l'invention :
- afin de protéger les personnes, la procédure d'alimentation du fil prévoit une mesure ou un échange de données à très basse tension préalable à la mise sous tension de fonctionnement du système ;
- l'enveloppe dissipatrice d'énergie comporte une partie mobile sur le fil, qui permet un branchement plus aisé de la prise sur son embase, et une dissipation d'énergie plus efficace lors d'un choc ;
- l'enveloppe dissipatrice d'énergie est un fusible mécanique amovible ;
- la reprise des efforts mécaniques a lieu dans un logement prévu sous la prise ou dans la prise ;
- l'enveloppe dissipatrice d'énergie est mise en compression lorsque la prise est connectée au drone, facilitant ainsi l'éjection de la prise ;
- l'enveloppe dissipatrice d'énergie n'est percée qu'en un seul endroit, dépourvue des saillies destinées à la reprise des efforts mécaniques : le trou permettant les branchements électriques permet également la reprise des efforts mécaniques.
- l'enveloppe dissipatrice d'énergie est un airbag qui ralentit la chute et amortit le choc.
- un parachute comporte un point d'accroche sur le drone et un sur la prise, le parachute lui même pouvant être logé sur le drone ou sur la prise ;
- un parachute comporte deux points d'accroches sur le fil : le premier au niveau du centre de la toile du parachute, le second au point de jonction des suspentes, tels que la longueur du parachute tendu - toile et suspentes - entre ces deux points soit inférieure ou égale à la longueur du fil entre ces deux points, de manière à ce qu'une traction sur le fil de part et d'autre de ces deux points conduise mécaniquement à la fermeture du parachute sur le fil ;
- la géométrie de la prise et de l'embase permet des rotations libres de la prise sur l'embase, évitant ainsi que le fil vrille si le drone effectue de nombreuses rotations sur lui même ;
- l'ensemble des éléments de connexion sur le drone - connexion électrique, reprise des efforts mécaniques, éventuel parachute, ou éventuel élément de fixation du parachute - sont fixés sur une plateforme en rotation libre sur le drone, évitant ainsi que le fil vrille si le drone effectue de nombreuses rotations sur lui-même ;
- une procédure ordonne à la base au sol l'avalement du fil immédiatement après la déconnexion entre le fil et le drone, dans le but de limiter la surface d'impact de la prise et du fil.

### DESCRIPTION SOMMAIRE DES FIGURES

Les dessins annexés illustrent l'invention :
- La figure 1 représente un drone (1) filaire muni d'une embase (2) qui vient de libérer sa prise (3) d'alimentation. La prise (3) d'alimentation chute, ralentie par un parachute (4). La base au sol (6) avale le fil.
- Les figures 2a, 2b, 2c, 2d représentent différentes géométries d'enveloppes (7) dissipatrices d'énergie selon l'invention habillant différentes prises (3).
- Les figures 3a, 3b, 3c représentent différentes façons d'insérer un système de ralentissement de la chute de la prise (3) type parachute (4).
- La figure 4 représente une prise (3) séparée en deux parties (31) et (32) reliées par un élément souple (54).
- La figure 5 représente une prise (3) munie d'un airbag (76) gonflé faisant office à la fois de système de ralentissement de la chute et d'enveloppe dissipatrice d'énergie.

De manière plus détaillée :

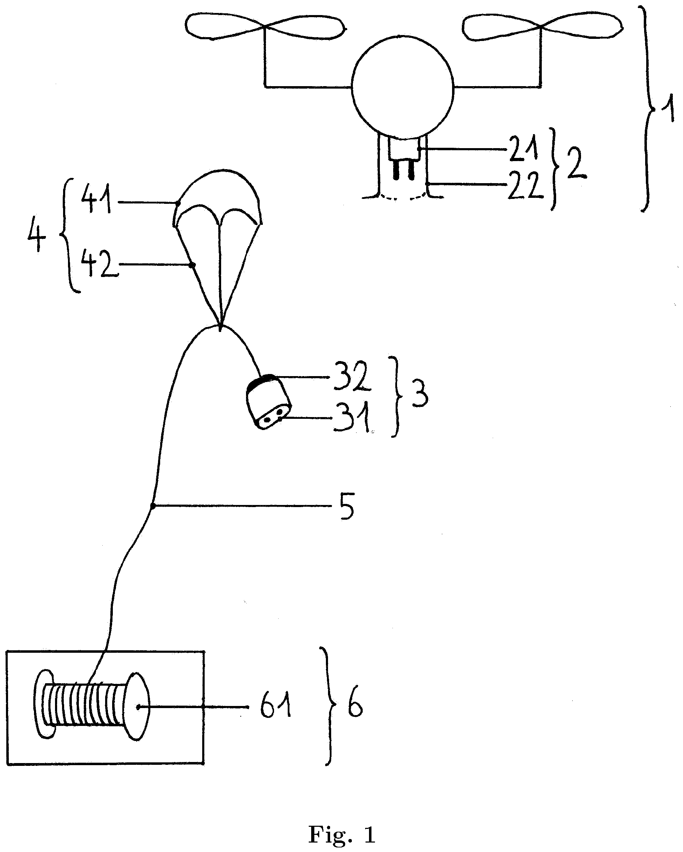

La figure 1 représente un drone (1) en vol, muni d'une embase (2). Les parties (21) et (31) de l'embase (2) et de la prise (3) se correspondent et assurent la connexion électrique ; les parties (22) et (32) de l'embase (2) et de la prise (3) se correspondent et assurent la reprise des efforts mécaniques de la prise. Le fil (5) chute, muni d'un parachute (4). Le parachute comporte une toile (41) et des suspentes (42). La base au sol (6) qui enroule le fil comporte un enrouleur (61) de fil (5).

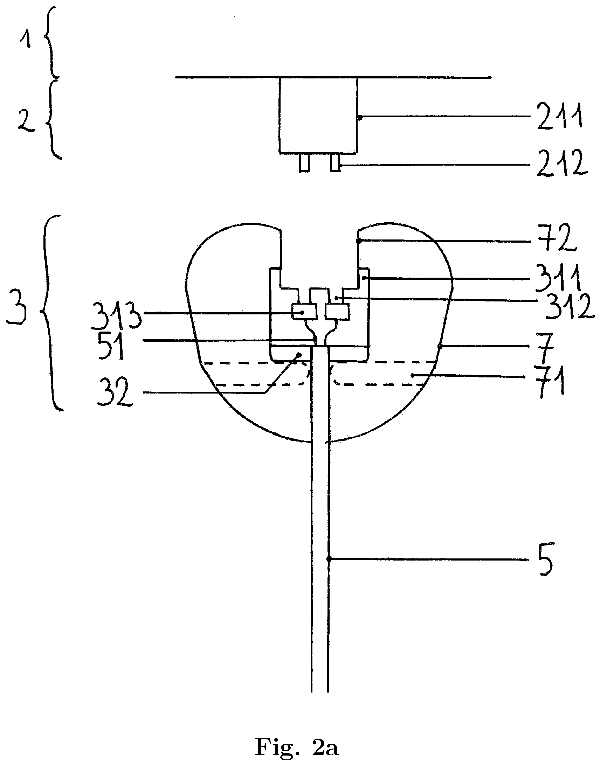

La figure 2a représente une prise (3) munie d'une enveloppe dissipatrice d'énergie (7). Des saillies (71) dans l'enveloppe permettent à la partie (22) non représentée de l'embase de reprendre les efforts mécaniques sur la partie (32) de la prise destinée à la reprise des efforts mécaniques. La partie (31) de la prise destinée à la transmission de la puissance électrique est constituée d'un plot cylindrique en isolant collé à la partie (32), l'isolant effectuant une marche (311) et englobe les deux contacts électriques (313) issus des deux brins électriques (51) du fil (5). Les contacts électriques (313) sont au fond de deux trous (312). La marche (311) en matériau isolant est prolongée par une marche (72) de l'enveloppe dissipatrice d'énergie, également isolante. La partie (21) de l'embase est constituée d'un plot isolant (211) dont dépassent les deux broches mâles (212) correspondant aux trous (312). La partie (22) permettant la reprise des efforts mécaniques n'est pas représentée, mais peut être constituée à titre d'exemple non limitatifs de deux coudes en rotation comme suggéré sur la figure 1, venant reprendre l'effort sous la partie (32), ou bien de deux à trois doigts en translation axiale venant également sous la partie (32), ou de deux tiges métalliques en translation perpendiculaire à leur axe dans des gorges venant enserrer le fil sous la partie (32). Le fil (5) comporte les brins (51) de transmission de puissance, un brin destiné à la reprise des efforts mécaniques, dans une gaine. Le fil (5) comporte optionnellement d'autres éléments comme une fibre optique et la prise (3) et l'embase (2) comporte optionnellement les connecteurs associés.

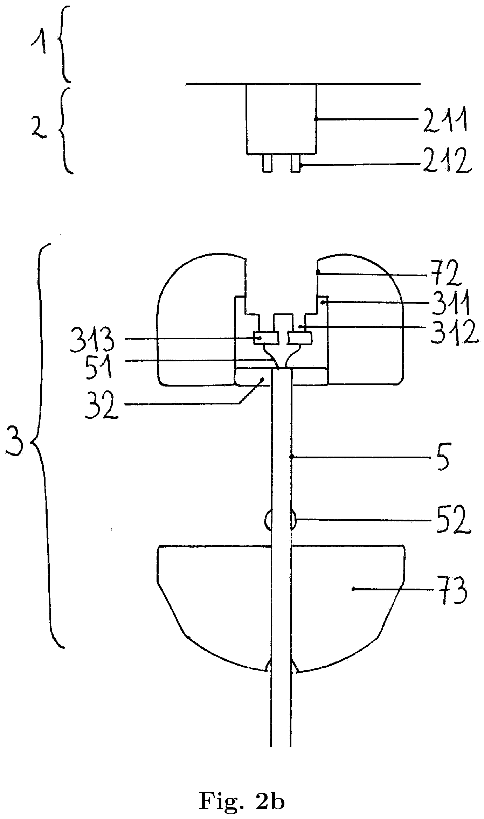

La figure 2b représente une variante de la prise (3) précédente. L'embase (2), le fil (5), et la partie haute de la prise, au dessus de la partie (32) sont identiques. Pour permettre un branchement plus facile de la prise, et une dissipation plus efficace de l'énergie lors d'une chute, l'enveloppe dissipatrice d'énergie (7) comporte une partie mobile (73) en demi-sphère sous la prise, coulissant sur le fil (5) et venant se clipser grâce à la surépaisseur (52). L'utilisateur peut d'abord brancher la partie haute de la prise (3), puis refermer la partie (22) de l'embase destinée à la reprise des efforts mécaniques, non représentée ici, puis venir clipser sur le picot (52) la partie (73).

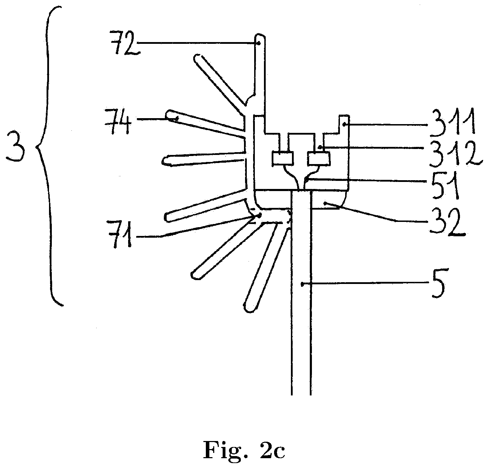

La figure 2c représente une variante de la prise (3) illustrée en 2a, où l'enveloppe dissipatrice d'énergie (7) est constituée de picots (74) en caoutchouc. Pour ne pas surcharger le dessin, seule la section gauche de l'enveloppe dissipatrice d'énergie (7) est représentée. En réalité, l'ensemble des extrémités des picots (74) décrit une forme sphérique.

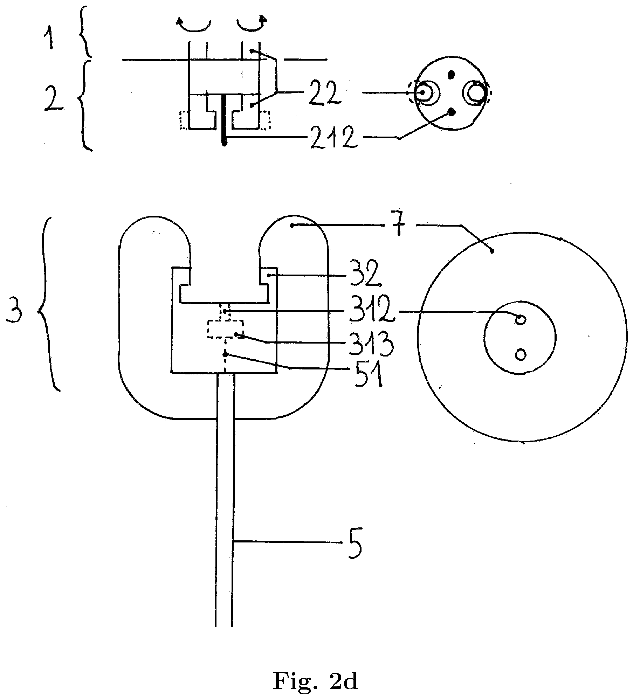

La figure 2d représente une prise (3) telle que l'enveloppe dissipatrice d'énergie (7) est monobloc et dépourvue de saillies (71), ce qui la rend particulièrement résistante aux impacts. L'embase (2) comporte des broches électriques mâles (212) et la partie (22) destinée à la reprise des efforts mécaniques est constituée de deux cames en rotation, dont les axes passent dans le bloc isolant (211) de l'embase. La partie (22), ici les cames, est représentée en trait plein dans la position qui permet de brancher et débrancher la prise (3), et en trait pointillé dans la position qui permet de solidariser la prise (3) et l'embase (2). La partie (32) permet la reprise des efforts mécaniques. La partie (31) destinée à la fonction électrique de la prise est assurée via des éléments (312), (313) similaires à ceux illustrés en figure 2a.

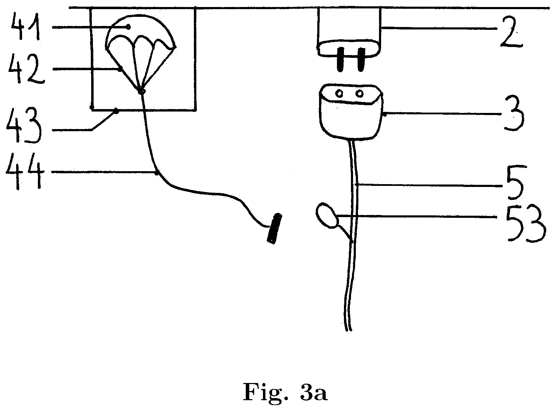

La figure 3a représente une prise (3) et une embase (2) dont les éléments (21), (22), (31), (32) ne sont pas détaillés, mais similaires à l'une des figures précédentes. Une boite (43) accueille un parachute (4) qui est plié rangé dans la boite (43) lorsque le drone décolle en mode filaire. Relié aux suspentes (42), on voit une cordelette (44) que l'utilisateur doit nouer au fil (5) sous la prise (3) via la boucle (53) avant le vol. Lorsque l'utilisateur actionne le mode non filaire alors que le drone (1) est en vol, la prise (3) est libérée de l'embase (2), la prise (3) et le fil (5) tombent, arrachant le parachute (4) à sa boite (43). La toile (41) se gonfle et ralentit la chute de la prise (3) et du fil (5).

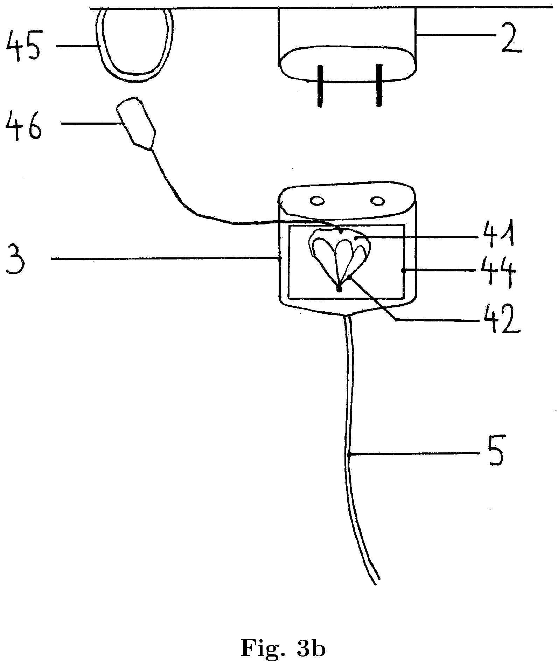

La figure 3b montre une boite (44) située sur ou dans la prise (3). Avant un vol filaire, le parachute (4) est rangé plié dans la boite (44). Les suspentes (42) sont solidaires de la prise. Une cordelette solidaire du centre de la toile (41) se termine par un système à scratch (46) se nouant avant le vol sur une boucle (45) située sur le drone (1). Lorsque l'utilisateur actionne le mode non filaire alors que le drone (1) est en vol, la prise (3) chute, la cordelette retenue au drone (1) via le scratch tire sur le centre de la toile (1) et arrache le parachute de sa boite (44). Le système à scratch (46) est dimensionné pour s'ouvrir une fois la cordelette et les suspentes (42) du parachute (4) tendues.

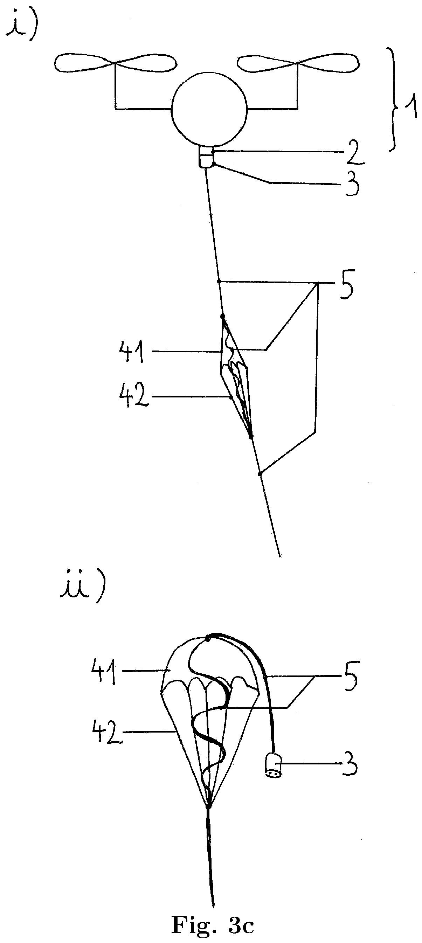

La figure 3c représente une façon de raccorder le parachute (4) sous la prise (3), bien connue des professionnels et amateurs de planeurs, qui permet de fermer le parachute (4) dans la situation i), lorsque le fil est branché au drone (1), et de l'ouvrir mécaniquement dans la situation ii), lorsque le fil (5) est détaché du drone. Un avantage de ce système est qu'il ne requiert aucun branchement ou manipulation avant un décollage, ni aucune manipulation de type repliage d'un parachute (4) après un passage d'un mode filaire à non filaire. La toile (41) est fixée en son centre sur le fil (5), de même que les suspentes (42). La figure i) montre comment une traction sur le fil (5) conduit à fermer le parachute (4) mécaniquement. La figure ii) montre comment l'absence de traction conduit mécaniquement à ouvrir le parachute (4).

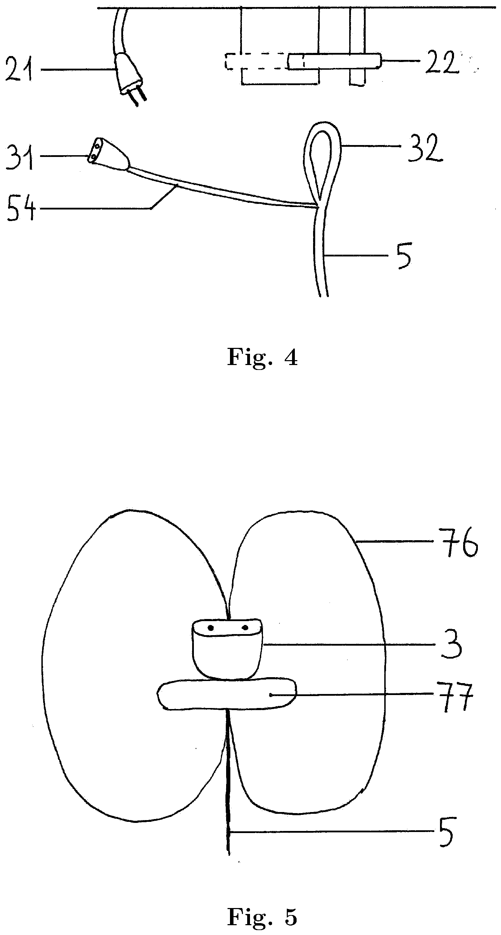

La figure 4 représente une prise (3) séparée en deux sous-parties, ici les parties (32) et (31), reliées par un élément souple (54). La partie (31) de la prise dédiée à la connexion électrique est légère et peut être en plastique mou car elle n'est soumise à aucun effort mécanique. La partie (32) peut être souple, par exemple constituée d'un brin en aramide dans un anneau en plastique circulaire avec un revêtement à faible coefficient de frottement pour faciliter la déconnexion. L'embase est également en deux parties. La partie (21) est une fiche légère à deux connecteurs électriques mâles. La partie (22) est un doigt coulissant actionné par un actionneur électrique.
La figure 5 représente une prise (3) équipé d'une cartouche de gaz (77), préférentiellement contenant de l'helium, avec un airbag (76) de forme sphérique, représenté ici gonflé. Un avantage de ce système est qu'il constitue à la fois un système de ralentissement de la chute, et une enveloppe dissipatrice d'énergie. Un inconvénient est qu'il faut remplacer le système complet ou la cartouche de gaz (77) après chaque chute du fil (5).

### MEILLEURES MANIÈRES DE RÉALISER L'INVENTION

Les modes de réalisation présentés sur les figures et détaillés ci-après sont des exemples non limitatifs de réalisation du système selon l'invention.

Pour illustrer notre invention, tous nos dispositifs sont adaptés à un même système drone (1) -fil (5) -base au sol (6).

Le drone (1) utilisé dans les différents modes de réalisation pèse 10 kg, comporte 6 rotors et une batterie. La base au sol (6) comporte un enrouleur de fil (61). Le fil (5) mesure 100 mètres de longueur. Le fil (5) comporte une gaine, entourant un brin en aramide, et deux brins électriques (51) de transmission de puissance. Les brins électriques (51) de transmission de puissance servent aussi à la transmission de données par la technique dite des courants porteurs en ligne. La section du fil (5) fait environ 3mm de diamètre. Une extrémité du fil (5) est branchée à la base au sol (6). A l'autre extrémité du fil (5) se trouve une prise destinée à être branchée au drone (1). Le système de reprise des efforts mécaniques entre le drone (1) et la base au sol (6) est dimensionné pour résister à une traction statique de 150 kg c'est à dire 1500 newton. En particulier, l'invention peut-être destinée à un drone (1) plus léger ou plus lourd, munis de plus ou moins de rotors, reliés par un fil (5) plus ou moins long, comportant différents types de brins, électriques, optiques, fluide, ou autres, à une base au sol (6) comportant ou non un enrouleur de fil (61).

Selon un premier mode de réalisation, la connexion selon l'invention est réalisé selon la figure (2b). La partie (32) destinée à la reprise des efforts mécaniques entre le drone (1) et le fil (5) est réalisée par une rondelle en titane de 1cm de diamètre extérieur et 3mm de diamètre intérieur, scellée par une résine et les brins en aramide du fil (5) sont effilochés et noyés dans cette résine, liée à la partie supérieure de la prise (3), dont la partie isolante en plastique dur est un plot cylindrique de 1cm de diamètre pour 1cm de hauteur. Les deux trous (312) sont éloignés de 5mm et font 4mm de profondeur. Les contacts électriques (313) sont en cuivre. L'enveloppe dissipatrice d'énergie (7) est une mousse isolante et légère, qui porte le diamètre de l'ensemble à 3cm. La marche (311) en plastique isolant mesure 5mm, et la marche (72) en mousse mesure 1cm. La partie mobile (73), également en mousse, fait 2cm de hauteur, pour un diamètre extérieur de 3cm, et un diamètre intérieur de 2,5mm. Cette partie mobile (73) peut coulisser sur le fil (5), mais sans action franche d'un utilisateur, elle reste au même endroit. La surépaisseur (52) fait 6mm de diamètre. La partie isolante (211) de l'embase fait environ 1cm de diamètre pour 1,5cm de hauteur, et dont dépassent d'environ 2mm deux broches électriques mâles (212). Les broches électriques mâles (212) sont montées sur ressorts. Lorsque la prise (3) est branchée, deux tiges métalliques de 2mm de diamètre, qui sont la partie (22) de l'embase assurant la reprise des efforts métalliques, actionnées par un moteur électrique, coulissent chacune entre deux gorges, et enserrent le fil (5) sous la rondelle (32), plaquant les contacts électriques (313) contre les broches électriques mâles (212). En position de vol filaire, la partie mobile (73) de mousse est clipsée contre la prise (3) et les tiges métalliques.

Supposons que, lorsque le drone (1) est en vol en mode filaire, l'utilisateur actionne le mode non filaire. La procédure implémentée dans ce mode de réalisation prévoit dans cet ordre : coupure du courant circulant dans le fil (5), passage du drone (1) sur batterie, actionnement des moteurs électriques qui font coulisser les tiges métalliques retenant la prise (3). La prise (3) est libérée, elle chute.

Si par hasard la prise (3) chute sur une personne ou au sol :
- La géométrie de l'enveloppe non conductrice, constituée à la fois par la matière en plastique isolant dans laquelle sont percés les deux trous (312) et par l'enveloppe dissipatrice d'énergie (7), rend particulièrement difficile d'accès les contacts électriques (313) grâce aux éléments (312), (311), (72).
- Le risque d'électrisation reste faible même si la prise d'alimentation est abîmée puisque la procédure d'alimentation prévoit l'arrêt de l'alimentation électrique au moment du détachement de la prise.
- Le risque de blessure par le choc est faible grâce à la présence de l'enveloppe dissipatrice d'énergie.

Une variation de ce mode de réalisation consiste à utiliser une géométrie plus simple, sans partie mobile et en un seul bloc (figure 2a), la mousse pouvant être remplacée par des picots en caoutchouc déformable (figure 2c).

Une autre variation de ce mode de réalisation (figure 2d) consiste à grouper les broches mâles (212) avec les éléments assurant la reprise des efforts mécaniques (22), ici des cames, dans une embase (2) compacte. Ainsi l'enveloppe dissipatrice d'énergie (7) de la prise (3) n'est ouverte qu'en un seul passage, permettant d'augmenter la résistance de l'enveloppe dissipatrice d'énergie (7) aux chocs répétés, comparativement aux enveloppes dissipatrices d'énergies comportant des saillies (71) des figures 2a, 2c. Sur la figure 2d, on a représenté une amélioration de l'invention, qui consiste à faciliter l'éjection de la prise au moment de la déconnexion : lorsque la prise est branchée à l'embase, la mousse est comprimée. Lorsque les cames assurant la reprise des efforts mécaniques tournent pour libérer la prise (3), la prise (3) s'éjecte d'elle même grâce à la mousse. L'enveloppe dissipatrice d'énergie (7) ici n'est pas collée contre la partie rigide de la prise (3), elle est simplement emboîtée. Ceci est possible grâce à l'utilisation d'un néoprène à grande extensibilité au niveau de la partie inférieure de la prise.

Des variations utiles de ce mode de réalisation consistent à faciliter un grand nombre de rotations du drone (1) en vol sur lui même, sans vriller le fil (3). L'embase (22) peut alors être monté sur un dispositif tournant, en rotation d'axe vertical par rapport au drone. Une autre solution consiste à utiliser des géométries de révolution pour la prise (3) comme l'embase (2), avec des connecteurs de type coaxiaux, bien connus de gens des métiers d'électricité générale. La prise (3) peut alors librement tourner dans l'embase (2). Les frottements des broches électriques (212) dans les trous (312) et sur les contacts (313) limitent peu la rotation, mais les frottements de la partie (22) assurant la reprise des efforts mécaniques de l'embase avec la partie (32) correspondante peuvent l'être plus. L'utilisation de traitement à base de tétra-fluoroéthylène sur la partie (32) dans la configuration de la figure 2d s'avère efficace ; avantageusement, la partie (32) peut être constituée d'un roulement à billes ou à rouleaux coniques.

Enfin, une variation de la géométrie présentée à la figure 2b consiste à supprimer la partie mobile (73) sous la prise, et protéger l'utilisateur de la partie (32) destinée à la reprise des efforts mécaniques, en insérant dans le fil ou en surmoulage sur le fil une partie semi-rigide d'une longueur environ égale à 2 fois la prise. Cette partie semi-rigide empêche ainsi un choc entre la partie (32) dure et le sol ou une personne.

Selon un second mode de réalisation, non compris dans la portée des revendications, la prise (3) et son embase (2) sont identiques à celle décrite par la figure 2d, à ceci près que :
- la prise (3) ne comporte pas d'enveloppe dissipatrice d'énergie (7).
- la prise (3) est dépourvue d'éléments anguleux : l'enveloppe extérieure de la prise (3) est une sphère d'environ 1,5cm de diamètre, tronquée sur le dessus pour permettre la fixation à l'embase (2).

Selon le principe illustré en figure 3a, on adjoint sur le drone (1), à 5 cm de l'embase (2), une boite (43) cubique de 3 cm par 3 cm par 3 cm, comportant un parachute (4) dont la toile (41) a un diamètre de 50 cm. Les suspentes (42) du parachute sont reliées à une cordelette (44). La cordelette seule dépasse de la boite, d'environ 25cm.

Sur le fil (5) d'alimentation du drone, à 15cm de la prise (3), on trouve une boucle (53). Avant le vol, la cordelette dépassant de la boite est reliée à la boucle.

L'alimentation du drone (1) est ici munie du dispositif de sécurité suivant. Un courant très basse tension haute fréquence, selon la technique bien connue des Courants Porteurs en Ligne, dialogue avec le drone (1) en permanence et permet en particulier de détecter ou non la présence du drone (1) au bout du fil. Sur le drone (1) se situe un circuit électronique passif identifiant le drone avec précision. Cette technique est bien connue des gens du métiers de l'électronique, en particulier des personnes travaillant sur l'Identification Radio Fréquences. La procédure d'alimentation du fil (5) du drone (1) prévoit que seule la présence du drone (1) branché au fil (5) autorise l'alimentation de puissance haute tension du drone.

Supposons que lorsque le drone est en vol et en mode filaire, l'utilisateur active le mode non filaire. La procédure prévoit alors la simple rotation des cames qui constituent la partie (22) de l'embase (2) destinée à la reprise des efforts mécaniques. La prise (3) est alors libérée. Le drone (1) détecte l'absence d'électricité et passe sur alimentation batterie. En se détachant, le dispositif d'alimentation du drone (1) détecte l'absence du drone (1) au bout du fil (5), et l'alimentation de puissance haute tension est coupé. En chutant la prise (3) entraîne la cordelette (44). La cordelette (44) arrache le parachute à sa boite.

Pendant que l'utilisateur se concentre sur la mission qu'il veut effectuer avec le drone, le parachute (4) s'ouvre et ralentit la chute de la prise (3). La procédure prévoit que l'enrouleur (61) de fil (5) de la base (6) au sol avale le fil à une vitesse de 5m/s de manière à ce que la prise (3) tombe directement sur la base au sol (3).

En cas de vent violent, de dysfonctionnement de l'enrouleur (61), ou si le drone (1) a libéré la prise (3) alors qu'il était significativement décalé de l'axe vertical surplombant la base (6) au sol, la prise (3) peut éventuellement chuter à terre ou sur une personne. Selon ce mode de réalisation, le dispositif de protection selon l'invention comporte notamment les caractéristiques suivantes :
- Une enveloppe non conductrice englobe les contacts électriques (313) de la prise (3).
- Le dispositif d'alimentation du drone (1) coupe le courant d'alimentation qui circule dans le fil (5) dès que la prise (3) est détachée de son embase (2), ce dispositif étant particulièrement protecteur car le courant ne peut être rétabli dans le fil (5) que lorsque le drone (1) est rebranché au fil (5).
- La prise (3) comporte un système de protection mécanique contre les chocs qui est un parachute (4).

Une variation de ce mode de réalisation compris dans la portée les revendications consiste, selon le principe illustré en figure 3b, à loger le parachute dans une petite boite (44) dans, sur la prise (3), ou sur le fil (5) immédiatement sous la prise (3). Les suspentes (42) du parachute sont attachées à la prise (3) ou sur le fil (5) sous la prise (3). Une cordelette solidaire du centre de la toile (41) du parachute (4) dépasse seule de la boite d'environ 25 cm. Un anneau (45) à 5cm de l'embase est destiné à accrocher la cordelette. Lorsque l'utilisateur branche la prise à l'embase, il doit également relier la cordelette à l'anneau (45) via un système à scratch (46). Le système à scratch (46) entre la cordelette et l'anneau est conçu résister à une traction de 5 newton. Au delà, il s'ouvre. Lorsque l'utilisateur passe d'un mode filaire à un mode non filaire, et que la prise (3) chute, la cordelette se tend, arrache le parachute (4) à sa boite (44), et lorsque les suspentes (42) sont également tendues le système à scratch (46) est sollicité au-delà des 5 newton pour lesquels il doit résister : il tombe avec la cordelette, le fil (5), la prise (3) et le parachute (4) ouvert.

Une deuxième variation de ce mode de réalisation consiste à fixer le parachute (4) sur le fil sous la prise, selon la technique bien connue des amateurs de planeurs, en deux points, la technique ayant déjà été décrite au moment de la description de la figure 3c. Ici, le parachute (4) tendu sous la prise avec ses suspentes (42) en configuration i) est un ensemble qui mesure environ 1m, et le point d'accroche du centre de la toile (41) du parachute (4) au fil (5) est environ à 1m de la prise (3). Pour l'utilisateur, un avantage est qu'il n'y a qu'un branchement à faire avant le décollage : c'est le branchement de la prise (3) à l'embase (2). De plus, lorsque le drone (1) revient à la base au sol (6) alors qu'il a effectué un passage d'un mode filaire à non filaire, il n'y a pas besoin de replier et ranger le parachute (4) avant de le réutiliser : la simple tension sur le fil (5) tient lieu de rangement.

Une troisième variation de ce mode de réalisation, illustré en figure 5, consiste à remplacer le parachute (4) par une cartouche de gaz (77) et une forme en plastique de type airbag (76). La forme en plastique une fois gonflée fait environ 50cm de diamètre. Le système complet : cartouche de gaz (77), airbag replié, système de déclenchement et gonflement, est regroupé dans une forme cylindrique d'environ 12cm par 4cm de diamètre. La procédure de passage de mode filaire à non filaire déclenche le détachement de la prise (3) puis le gonflement automatique de l'airbag (76) autour de la prise (3). La réalisation d'airbags miniaturisés et de faible poids est aujourd'hui connue des professionnels des bracelets anti-noyade, et ne nécessite pas de description plus poussée. Une amélioration du système existant consiste à remplacer le gaz de gonflement usuel - air ou azote - par de l'hélium. Après chaque utilisation, il convient de remplacer le système airbag complet.

Selon un troisième mode de réalisation, illustré en figure 4, la prise (3) destinée à être branchée au drone (1) est séparée en deux parties distinctes reliées par un élément souple (54). En pratique, cet élément souple mesure 15cm et contient les deux brins d'alimentation du drone (1). La partie (32) qui assure la reprise des efforts mécaniques est un anneau de 2cm de diamètre et 5mm de section, en caoutchouc. Le brin en aramide présent dans le fil (5) circule également à l'intérieur de cet anneau et vient se renouer sur lui même. Sur le drone (1) correspond un doigt rétractable, permettant de rendre solidaire l'anneau et le drone (1), ou au contraire de libérer l'anneau du drone (1).

La partie (31) qui assure la transmission de puissance est une fiche en plastique de 5mm de large par 8mm de long, comportant deux broches femelles espacées de 3mm, et enfoncées dans la partie plastique de 5mm. Le poids de la fiche est d'environ 5g. Lorsque l'utilisateur branche le drone (1) au fil (5), il doit donc d'une part rendre solidaire l'anneau et le drone (1) via le doigt rétractable, et d'autre part brancher la fiche à l'embase (21) correspondante sur le drone. L'alimentation haute tension est ici munie d'un dispositif de protection qui consiste à mesurer préalablement grâce à un courant très basse tension l'impédance du système.

Lorsque le drone est en vol en mode filaire, supposons que l'utilisateur active le mode non filaire. La procédure prévoit alors : coupure de l'alimentation du fil (1), bascule de l'alimentation du drone (1) sur batterie, libération de l'anneau par le doigt rétractable. L'anneau chute et en tombant arrache la fiche à son embase.

Ce mode de réalisation comprend donc les trois caractéristiques suivantes :
- une enveloppe non conductrice englobe les contacts électriques de la prise (3),
- la procédure d'alimentation coupe le courant dans le fil (5),
- la prise est séparée en deux parties distinctes (31) et (32) reliées par un élément souple (54) permettant de limiter les blessures lorsque la prise chute sur une personne : la répartition du poids en deux sous-parties, et l'absorption de l'énergie du choc dans la partie souple permettent de réduire le risque de blessure.

Une variante de ce mode de réalisation consiste à séparer la fiche d'alimentation électrique en deux fiches pour chaque brin d'alimentation, ce qui permet de réduire encore le poids de chaque sous-partie, et de réduire d'autant le risque de blessure lors de la chute de la prise (3) sur une personne.

### POSSIBILITÉS D'APPLICATIONS INDUSTRIELLES

La connexion selon l'invention est susceptible d'être implémenté sur la plupart des drones filaires, pour permettre un atterrissage alors que le fil a été coincé dans un obstacle. La connexion selon l'invention est particulièrement destiné aux drones filaires pour lesquels l'utilisateur souhaite un passage en mode non filaire permettant de s'affranchir rapidement du périmètre d'action délimité par la longueur du fil.

## Revendications

1. Connexion entre un drone (1) filaire et un fil (5) du drone, la connexion comprenant:
- une prise (3) sur le fil (5) et une embase (2) sur le drone (1), la prise (3) et l'embase (2) étant configurées pour assurer au moins une alimentation en puissance du drone (1) et une reprise des efforts mécaniques entre le drone (1) et le fil (5), la prise (3) étant détachable à distance, pendant que le drone est en vol, une base au sol (6) étant configurée pour alimenter le fil (5),
- un dispositif de protection comprenant :
a) une enveloppe non conductrice qui englobe des contacts électriques (313) de la prise (3), la géométrie de l'enveloppe limitant tout contact entre une personne et les contacts électriques,
b) un système mécanique configuré pour couper le courant d'alimentation au niveau de la base au sol (6), de sorte que l'ensemble du fil (5) et les contacts électriques (313) de la prise (3) sont hors tension,
c) un système de protection mécanique de la prise (3) contre les chocs, prenant au moins l'une des trois formes suivantes :
i) une enveloppe dissipatrice d'une énergie mécanique(7), constituée de picots ou d'ailettes en caoutchouc;
ii) un système de ralentissement de la chute, tel un parachute (4), s'ouvrant automatiquement lors d'une déconnexion de la prise (3) du drone (1),
iii) la séparation de la prise (3) en plusieurs sous-parties reliés par un ou des éléments souples.

2. Connexion selon la revendication 1, **caractérisée en ce que** le système mécanique configuré pour couper le courant d'alimentation du fil (5) est également configuré pour déclencher, préalablement à la mise sous tension de fonctionnement du drone (1), une mesure ou un échange électronique de données entre la base au sol (6) et le drone (1) à très basse tension.

3. Connexion selon l'une des revendications précédentes, **caractérisée en ce que** l'enveloppe dissipatrice de l'énergie mécanique (7) est un fusible mécanique amovible, tenant sur la partie rigide de la prise (3) par simple encastrement.

4. Connexion selon l'une des revendications précédentes, **caractérisée en ce que** l'enveloppe dissipatrice d'énergie (7) est mise en compression lorsque la prise (3) est connectée au drone (1), facilitant ainsi l'éjection de la prise (3).

5. Connexion selon l'une des revendications précédentes, **caractérisée en ce que** l'enveloppe dissipatrice d'énergie (7) est un airbag (76).

6. Connexion selon l'une des revendications précédentes, **caractérisé en ce que** le parachute (4) destiné à ralentir la chute de la prise (1) est logé sur le drone (1).

7. Connexion selon l'une des revendications précédentes, **caractérisé en ce que** le parachute (4) est fixé en deux points sur le fil (5) sous la prise (3), l'un des points étant le centre de la toile (41) du parachute, l'autre le point de jonction des suspentes (42), tels que lorsque l'on tend le fil (5) de part et d'autre de ces deux points, le parachute (4) se ferme sur le fil (5).

8. Connexion selon l'une des revendications précédentes, **caractérisé en ce qu'**une procédure prévoit un avalement du fil (5) immédiatement après détachement de la prise (3) du drone (1), dans le but de limiter la surface d'impact potentielle de la prise (3).

## Patentansprüche

1. Verbindung zwischen einer verdrahteten Drohne (1) und einem Draht (5) der Drohne, wobei die Verbindung umfasst:
- eine Entnahmestelle (3) am Draht (5) und eine Platte (2) an der Drohne (1), wobei die Entnahmestelle (3) und die Platte (2) konfiguriert sind, um mindestens eine Leistungszufuhr der Drohne (1) und eine mechanische Lastenaufnahme zwischen der Drohne (1) und dem Draht (5) sicherzustellen, wobei die Entnahmestelle (3) aus der Entfernung abnehmbar ist, während die Drohne fliegt, wobei eine Bodenbasis (6) konfiguriert ist, um den Draht (5) zu versorgen,
- eine Schutzvorrichtung, umfassend:
a) eine nicht leitende Hülle, die die elektrischen Kontakte (313) der Entnahmestelle (3) einschließt, wobei die Geometrie der Hülle jeden Kontakt zwischen einer Person und den elektrischen Kontakten begrenzt,
b) ein mechanisches System, das konfiguriert ist, um den Zufuhrstrom im Bereich der Bodenbasis (6) zu trennen, so dass die Gruppe aus Draht (5) und elektrischen Kontakten (313) der Entnahmestelle (3) ohne Spannung sind,
c) ein mechanisches Schutzsystem der Entnahmestelle (3) gegenüber Stößen, das mindestes eine der drei folgenden Formen annimmt:
i) eine mechanische Energie ableitende Hülle (7), die aus Stiften oder Rippen aus Kautschuk besteht;
ii) ein Fallbremssystem, wie beispielsweise ein Fallschirm (4), der sich bei einer Trennung der Entnahmestelle (3) von der Drohne (1) automatisch öffnet,
iii) die Trennung der Entnahmestelle (3) an mehreren mit einem oder mehreren flexiblen Elementen verbundenen Unterteilen.

2. Verbindung nach Anspruch 1, **dadurch gekennzeichnet, dass** das zum Trennen des Zufuhrstroms des Drahts (5) konfigurierte mechanische System auch konfiguriert ist, um vor dem Einschalten der Funktion der Drohne (1) eine elektronische Messung oder einen elektronischen Datenaustausch zwischen der Bodenbasis (6) und der Drohne (1) bei sehr niedriger Spannung auszulösen.

3. Verbindung nach einem der vorangehenden Ansprüche, **dadurch gekennzeichnet, dass** die mechanische Energie ableitende Hülle (7) eine abnehmbare mechanische Sicherung ist, die durch einfaches Einbetten am starren Teil der Entnahmestelle (3) einstückig angeformt ist.

4. Verbindung nach einem der vorangehenden Ansprüche, **dadurch gekennzeichnet, dass** die Energie ableitende Hülle (7) komprimiert wird, wenn die Entnahmestelle (3) mit der Drohne (1) verbunden ist, wodurch die Entnahme (3) erleichtert wird.

5. Verbindung nach einem der vorangehenden Ansprüche, **dadurch gekennzeichnet, dass** die Energie ableitende Hülle (7) ein Airbag ist (76).

6. Verbindung nach einem der vorangehenden Ansprüche, **dadurch gekennzeichnet, dass** sich der zum Bremsen des Falls der Entnahmestelle (1) bestimmte Fallschirm (4) an der Drohne (1) befindet.

7. Verbindung nach einem der vorangehenden Ansprüche, **dadurch gekennzeichnet, dass** der Fallschirm (4) an zwei Stellen am Draht (5) unter der Entnahmestelle (3) befestigt ist, wobei eine der Stellen die Mitte des Fallschirmgewebes (41) und die andere Stelle die Verbindung der Leinen (42) ist, so dass sich der Fallschirm (4) am Draht (5) schließt, wenn man an beiden dieser Stellen am Draht (5) zieht.

8. Verbindung nach einem der vorangehenden Ansprüche, **dadurch gekennzeichnet, dass** ein Verfahren einen Einzug des Drahts (5) direkt nach dem Entfernen der Entnahmestelle (3) von der Drohne (1) vorsieht, um die potenzielle Aufprallfläche der Entnahmestelle (3) zu verringern.

## Claims

1. A connection between a wired drone (1) and a wire (5) of the drone, the connection comprising:
- a socket (3) on the wire (5) and a header (2) on the drone (1), the socket (3) and the header (2) being configured to provide at least one power supply to the drone (1) and a recovery of the mechanical forces between the drone (1) and the wire (5), the socket (3) being remotely detachable, while the drone is in flight, a ground base (6) being configured to feed the wire (5),
- a protection device comprising:
a) a non-conductive sheath which encloses electrical contacts (313) of the socket (3), the geometry of the sheath limiting any contact between a person and the electrical contacts,
b) a mechanical system configured to cut off the supply current at the ground base (6), so that the assembly of the wire (5) and the electrical contacts (313) of the socket (3) are powered off,
c) a system for mechanical protection of the socket (3) against shocks, taking at least one of the following three forms:
i) a sheath dissipating a mechanical energy (7), consisting of rubber studs or fins;
ii) a system for slowing down the fall, such as a parachute (4), opening automatically when disconnecting the socket (3) from the drone (1),
iii) the separation of the socket (3) into several sub-parts connected by one or more flexible elements.

2. The connection according to claim 1, **characterized in that** the mechanical system configured to cut off the supply current of the wire (5) is also configured to trigger, prior to the application of operating voltage to the drone (1), a measurement or an electronic exchange of data between the ground base (6) and the drone (1) at very low voltage.

3. The connection according to any of the preceding claims, **characterized in that** the sheath dissipating mechanical energy (7) is a removable mechanical fuse, holding on the rigid part of the socket (3) by simple embedding.

4. The connection according to any of the preceding claims, **characterized in that** the energy dissipating sheath (7) is compressed when the socket (3) is connected to the drone (1), thus facilitating the ejection of the socket (3).

5. The connection according to any of the preceding claims, **characterized in that** the energy dissipating sheath (7) is an airbag (76).

6. The connection according to any of the preceding claims, **characterized in that** the parachute (4) intended to slow down the fall of the socket (1) is housed on the drone (1).

7. The connection according to any of the preceding claims, **characterized in that** the parachute (4) is fixed at two points on the wire (5) under the socket (3), one of the points being the center of the fabric (41) of the parachute, the other the junction point of the shrouds (42), such that, when the wire (5) is stretched on either side of these two points, the parachute (4) closes on the wire (5).

8. The connection according to any of the preceding claims, **characterized in that** a procedure provides for a swallowing of the wire (5) immediately after detachment of the socket (3) from the drone (1), in order to limit the surface of potential impact of the socket (3).
